# EUROPÄISCHE PATENTSCHRIFT

(11) **EP 1 997 686 B1**
(45) Veröffentlichungstag und Bekanntmachung des Hinweises auf die Patenterteilung: **28.09.2011**
(21) Anmeldenummer: 08156513.7
(22) Anmeldetag: 20.05.2008
(51) Int. Cl.: B60R 16/02, B60D 1/62, A01B 59/00

(54) **Vorrichtung zum Übertragen elektrischer Energie von einem landwirtschaftlichen Arbeitsfahrzeug auf ein an das Arbeitsfahrzeug ankoppelbares Anbaugerät**
Device for transferring electrical energy from an agricultural work vehicle to an extension device which can be coupled onto the work vehicle
Dispositif destiné à la transmission d'énergie électrique d'un véhicule de travail agricole à un élément auxiliaire pouvant être couplé au véhicule de travail

(30) Priorität: 24.05.2007 DE 102007024644
(43) Veröffentlichungstag der Anmeldung: 03.12.2008
(73) Patentinhaber: Deere & Company, Moline, IL 61265-8098 (US)
(72) Erfinder: Tarasinski Dr., Nicolai, 67227, Frankenthal (DE); Hahn, Klaus, 68199, Mannheim (DE)
(74) Vertreter: Löser, Iris

(56) Entgegenhaltungen:
- DE-A1-102004 052 023
- DE-A1-102005 019 362
- US-A- 4 196 785
- US-B1- 6 237 278

## Beschreibung

Die Erfindung betrifft eine Vorrichtung zum Übertragen elektrischer Energie von einem landwirtschaftlichen Arbeitsfahrzeug auf ein an das Arbeitsfahrzeug reversibel ankoppelbares Anbaugerät. Die Vorrichtung umfasst mindestens eine arbeitsfahrzeugseitig angeordnete Leistungselektronik, mindestens eine elektrische Arbeitsfahrzeugschnittstelle und mindestens eine elektrische Anbaugeräteschnittstelle. Die Leistungselektronik ist mit elektrischer Energie speisbar, welche von einem Generator und/oder von einer Brennstoffzelle des Arbeitsfahrzeugs erzeugbar ist. Die Leistungselektronik ist mit dem Generator und mit der Arbeitsfahrzeugschnittstelle elektrisch verbindbar. Das Anbaugerät weist mindestens eine Anbaugeräteschnittstelle und mindestens eine elektrische Last auf. Mit der elektrischen Last des Anbaugeräts ist eine landwirtschaftliche Arbeitsfunktion ausführbar. Mindestens eine Arbeitsfahrzeugschnittstelle ist mit mindestens einer Anbaugeräteschnittstelle koppelbar, und hierüber ist zumindest ein Teil der vom Generator des Arbeitsfahrzeugs erzeugten elektrischen Energie über die Arbeitsfahrzeugschnittstelle auf das Anbaugerät übertragbar.

Landwirtschaftliche Arbeitsfahrzeuge wie z.B. Feldhäcksler, selbstfahrende Spritzen und Traktoren sind aus dem Stand der Technik bekannt. Ein Traktor ist ein vielseitiges Arbeitsfahrzeug, da an einen Traktor unterschiedliche Anbaugeräte angekoppelt werden können. Regelmäßig werden an einen Traktor Pflüge, Eggen, Grubber, Sämaschinen, Spritzen, Mähwerke und Pressen angekoppelt. Dementsprechend führt ein Traktor mit einem jeweils angekoppelten Anbaugerät unterschiedlichste landwirtschaftliche Arbeitsfunktionen aus. Dies macht es auch erforderlich, dass der Traktor das jeweilige Anbaugerät entsprechend ansteuert, falls die landwirtschaftliche Arbeitsfunktion, welche mit dem Anbaugerät realisiert wird, mit einem Aktuator, einem Werkzeug oder mit einem Motor realisiert wird. Aber auch unterschiedliche Erntevorsätze für einen Mähdrescher kann ein Anbaugerät darstellen, welches eine individuelle Ansteuerung durch den Mähdrescher erfordert.

Es sind Anbaugeräte bekannt, deren Aktuatoren bzw. Werkzeuge mechanisch angetrieben werden, wobei mechanische Antriebsleistung von einer am Traktor vorgesehenen Zapfwelle auf das Anbaugerät übertragen wird. Ein Beispiel für ein solches Anbaugerät ist eine Rundballenpresse. Weiterhin sind Anbaugeräte bekannt, welche hydraulisch angetrieben werden. Hierzu sind am Traktor Hydraulikschnellkupplungen vorgesehen, welche mit Schläuchen des Anbaugeräts verbunden werden. Ein solches Anbaugerät ist beispielsweise ein Frontlader oder eine gezogene Spritze. Beim Frontlader erfolgt die Steuerung bzw. Betätigung des Auslegers hydraulisch. Bei der gezogenen Spritze wird das Gestänge hydraulisch verstellt.

Sowohl die mechanische als auch die hydraulische Übertragung von Leistung zwischen dem Arbeitsfahrzeug und dem Anbaugerät bringt Probleme bei der Ansteuerung mit sich. So ist es unter anderem erforderlich, dass der Verbrennungsmotor des Arbeitsfahrzeugs bei einer bestimmten Drehzahl betrieben wird und/oder dass das Getriebe ein bestimmtes, vorgegebenes Übersetzungsverhältnis aufweist, damit das über die Zapfwelle angesteuerte Anbaugerät bestimmungsgemäß betrieben werden kann. Hierdurch kann sich ein schlechter Wirkungsgrad des Gespanns, bestehend aus Arbeitsfahrzeug und Anbaugerät, ergeben.

Es sind Anbaugeräte bekannt, welche elektrische Verbraucher aufweisen. Dies sind Elektromotoren und/oder Lüfter einer relativ geringen Leistungsklasse. Weiterhin können Beleuchtungseinrichtungen und/oder Elektromagnete als Stellantriebe elektrisch betrieben werden. Diese werden bislang vom Bordnetz des Arbeitsfahrzeugs versorgt. Hierfür erforderliche elektrische Energie wird von der herkömmlichen Lichtmaschine des Arbeitsfahrzeugs erzeugt. Es werden bislang keine Anbaugeräte mit elektrischen Lasten bzw. elektrischen Verbrauchern eingesetzt, welche eine größere Leistungsaufnahme zum Ausführen einer landwirtschaftlichen Arbeitsfunktion aufweisen.

Aus der EP 1 306 955 A2 ist ein mobiles Hochspannungsnetzwerk eines Arbeitsfahrzeugs zur Bereitstellung von Gleichspannung mit hoher Leistung für ein Anbaugerät bekannt. Hierbei wird lediglich Gleichstrom über die Anbauschnittstelle des Arbeitsfahrzeugs bzw. des Anbaugeräts übertragen. Hiermit sind jedoch Probleme aufgrund von Korrosion und Bildung von Lichtbögen verbunden.

Aus der WO 2006/1437 A1 ist eine Schnittstellenvorrichtung zum Übertragen elektrischer Energie zwischen einem Arbeitsfahrzeug und einem an das Arbeitsfahrzeug ankoppelbaren Anbaugerät bekannt. Der Schnittstellenvorrichtung ist eine Messeinrichtung und/oder eine Stelleinrichtung zugeordnet. Mit der Messeinrichtung wird mindestens eine elektrische Zustandsgröße der übertragenen elektrischen Energie quantifiziert. Mit der Stelleinrichtung wird mindestens eine elektrische Zustandsgröße der übertragenen elektrischen Energie verändert. Im Konkreten kann mit der Stelleinrichtung die Spannung und/oder die Stromstärke der übertragenen elektrischen Energie erhöht oder reduziert werden, oder die Schnittstellenvorrichtung wird spannungsfrei geschaltet.

Eine Vorrichtung mit den Merkmalen des Oberbegriffs des Anspruchs 1 ist von US 4 196 785 bekannt.

Der vorliegenden Erfindung liegt daher die Aufgabe zugrunde, eine Vorrichtung der eingangs genannten Art anzugeben und weiterzubilden, durch welche die vorgenannten Probleme überwunden werden. Insbesondere soll mit der Vorrichtung eine elektrische Versorgung eines an das Arbeitsfahrzeug ankoppelbaren Anbaugeräts möglich sein, wobei die Regelbarkeit beim Betrieb des Anbaugeräts flexibler gestaltet oder verbessert und der Wirkungsgrad erhöht werden soll.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist eine Vorrichtung der eingangs genannten Art dadurch gekennzeichnet, dass die Leistungselektronik ausgebildet ist, um die für die elektrische Last des jeweiligen Anbaugeräts erforderliche Stromart zur Verfügung zu stellen, und dass mindestens zwei unterschiedliche Stromarten von der Leistungselektronik zur Verfügung stellbar sind.

Erfindungsgemäß wird ein Konzept zur elektrischen Versorgung des landwirtschaftlichen Arbeitsfahrzeugs und/oder des Anbaugeräts vorgeschlagen. Hierbei weist das Anbaugerät eine elektrische Last bzw. einen elektrischen Verbraucher auf, mit welcher bzw. mit welchem eine landwirtschaftliche Arbeitsfunktion ausgeführt werden kann. Es ist zu erwarten, dass unterschiedliche Anbaugeräte unterschiedlich geartete elektrische Verbraucher bzw. Lasten aufweisen, welche jeweils mit unterschiedlichen Stromarten und in unterschiedlichen Leistungsklassen vom Arbeitsfahrzeug elektrisch zu versorgen sind. Hierzu sieht das erfindungsgemäße Konzept vor, die elektrische Energie mit dem Arbeitsfahrzeug bereitzustellen bzw. zu erzeugen. Weiterhin weist das Arbeitsfahrzeug mindestens eine Leistungselektronik auf, mit welcher die von der elektrischen Energiequelle erzeugte elektrische Energie in die von dem momentan an das Arbeitsfahrzeug angekoppelten Anbaugerät benötigte umwandelbar ist. Hierdurch können in vorteilhafter Weise unterschiedlichste Anbaugeräte an das Arbeitsfahrzeug angekoppelt und elektrisch betrieben werden. Die Anbaugeräte selbst können einfacher ausgestaltet werden und müssen nicht mit eigenen Leistungselektronik-Komponenten ausgestattet sein. Hierdurch werden Redundanzen vermieden und Kosten reduziert. Die Vorrichtung zum Übertragen elektrischer Energie ist flexibel und rekonfigurierbar, falls an das Arbeitsfahrzeug ein anderes Anbaugerät angekoppelt bzw. angeschlossen wird. In vorteilhafter Weise ist des Weiteren ein sicherer und zuverlässiger Betrieb möglich, da die Leistungselektronik ein fester Bestandteil des Arbeitsfahrzeugs ist. Hieraus resultiert insgesamt ein verbesserter Wirkungsgrad des Gespanns, bestehend aus landwirtschaftlichem Arbeitsfahrzeug und angekoppeltem Anbaugerät, da beispielsweise keine zwangsweise Kopplung der Drehzahl des Verbrennungsmotors mit der beabsichtigten Betriebsart des Anbaugeräts erforderlich ist. Insoweit kann mit dem erfindungsgemäßen elektrischen Versorgungskonzept eine flexible und eine auf vorgebbare Zielsetzungen optimierte Ansteuerstrategie realisiert werden. Beispielsweise kann das Arbeitsfahrzeug und das Anbaugerät derart angesteuert bzw. betrieben werden, dass der Kraftstoffverbrauch des Verbrennungsmotors minimiert wird. Auch kann das Gespann derart angesteuert werden, dass die durchzuführenden Arbeitsschritte zeitoptimiert, also so schnell wie möglich ausgeführt werden. Mit entsprechender Leistungselektronik kann der Leistungsfluss der elektrischen Energie zwischen Arbeitsfahrzeug und Anbaugerät in gewissen Grenzen flexibel angesteuert werden.

Erfindungsgemäß ist mindestens ein Überwachungsmittel vorgesehen und entsprechend ausgebildet, mit welchem zumindest die nachfolgend aufgelisteten Zustände überwacht werden können.

So soll überwachbar sein, ob eine Anbaugeräteschnittstelle an die Arbeitsfahrzeugschnittstelle vollständig oder unvollständig angeschlossen ist. Falls die zwei Schnittstellen unvollständig angeschlossen sind, soll die Arbeitsfahrzeugschnittstelle spannungsfrei bleiben.

Falls die Anbaugeräteschnittstelle von der Arbeitsfahrzeugschnittstelle getrennt werden soll, soll ein entsprechend ausgebildetes Überwachungsmittel dies erkennen und die Arbeitsfahrzeugschnittstelle spannungsfrei schalten.

Weiterhin soll das Überwachungsmittel feststellen können, ob eine elektrische Isolierung der elektrischen Komponenten gegeben ist oder nicht. Falls festgestellt wird, dass keine Isolation oder dass keine ausreichende Isolation der elektrischen Komponenten vorliegt, kann eine Warnung des Fahrers und/oder ein Abschalten der Vorrichtung zum Übertragen der elektrischen Energie erfolgen.

Als mögliche Stromart kann Wechselstrom, Mischstrom und/oder Gleichstrom vorgesehen sein. Als Wechselstrom kann Drehstrom oder ein- oder mehrphasiger Wechselstrom in Frage kommen. In diesem Zusammenhang können als Stromart bzw. Spannungsart auch eine Sägezahnspannung oder Rechteckpulse bzw. Spannungspulse von der Leistungselektronik gewandelt und über die elektrischen Schnittstellen zur Verfügung gestellt werden. Die Rechteckpulse können vorgebbare oder veränderbare Pulsbreiten und/oder Pulsfrequenzen und/oder Pulsabstände aufweisen.

Gemäß einer bevorzugten Ausführungsform weist das Arbeitsfahrzeug einen Gleichspannungszwischenkreis und einen aktiven oder passiven Gleichrichter auf. Die von dem Generator erzeugte elektrische Energie ist mit dem Gleichrichter dem Gleichspannungszwischenkreis zuführbar. Die mindestens eine Leistungselektronik ist von dem Gleichspannungszwischenkreis elektrisch versorgbar. Da der Generator in der Regel von dem Verbrennungsmotor des Arbeitsfahrzeugs mechanisch angetrieben wird und somit mit einer vom Verbrennungsmotor abhängenden Drehzahl betrieben wird, hat auch die von dem Generator zunächst erzeugte Wechselspannung eine von der Drehzahl des Verbrennungsmotors abhängige Frequenz. Mit dem Gleichrichter wird die vom Generator erzeugte elektrische Energie drehzahlunabhängig in den Gleichspannungszwischenkreis eingespeist, wobei die Leistungselektronik die Gleichspannung in die von dem Anbaugerät benötigte Stromart wandelt und der elektrischen Last des Anbaugeräts zur Verfügung stellt.

Besonders bevorzugt weist die Leistungselektronik einen Umrichter auf, welcher derart betreibbar ist, dass mindestens zwei unterschiedliche Stromarten wandelbar sind. So kann beispielsweise der Umrichter derart angesteuert werden, dass dieser dem Anbaugerät eine fest eingestellte, standardisierte Spannung bzw. Frequenz liefert, beispielsweise 480 V bei 60 Hz. Falls ein anderes Anbaugerät an das Arbeitsfahrzeug angekoppelt wird, kann mit demselben Umrichter eine standardisierte, feste Rechteckspannung, beispielsweise mit 400 Hz, gewandelt werden. Grundsätzlich kann der Umrichter dem Anbaugerät auch Gleichstrom zur Verfügung stellen, wenn dies auch - aus den oben genannten Gründen - weniger bevorzugt ist.

Ganz besonders bevorzugt sind zur Übertragung der elektrischen Energie mindestens zwei, vorzugsweise vier, der Arbeitsfahrzeugschnittstelle und/oder der Anbaugeräteschnittstelle zugeordnete elektrische Leitungsverbindungen vorgesehen. Über mindestens eine der Leitungsverbindungen sind verschiedene Stromarten übertragbar. Über diese Leitungsverbindungen, welche durch entsprechende Leitungskontakte der beiden elektrischen Schnittstellen hergestellt werden können, werden die unterschiedlichen Stromarten übertragen. Dementsprechend können zwei, drei oder vier Leitungsverbindungen aktiv an der Stromübertragung zwischen Arbeitsfahrzeug und Anbaugerät beteiligt sein, je nachdem, welche Stromart das jeweilige Anbaugerät zum Betrieb benötigt.

Gemäß einer besonders bevorzugten Ausführungsform weist die Arbeitsfahrzeugschnittstelle und/oder die Anbaugeräteschnittstelle elektrische Leitungskontakte auf, welche zu mindestens einem Steckverbinder zusammengefasst sind. Ein solcher Steckverbinder kann arbeitsfahrzeugseitig in Form einer Steckdose und anbaugeräteseitig in Form eines Steckers ausgebildet sein. Stecker und Steckdose sind im Wesentlichen komplementär zueinander ausgebildet. Vorzugsweise weist die Arbeitsfahrzeugschnittstelle und/oder die Anbaugeräteschnittstelle jeweils zwei Steckverbinder auf. Vorzugsweise umfasst ein Steckverbinder vier Leitungskontakte, welche bei einer Leistungsübertragung als drei Phasen und ein Nullleiter genutzt werden können. Die Leitungskontakte eines Steckverbinders sind mit den den elektrischen Strom übertragenden Leitungsverbindungen elektrisch verbunden.

Die zu einem arbeitsfahrzeugseitigen Steckverbinder zusammengefassten elektrischen Leitungskontakte können über Leitungsverbindungen mit der Leistungselektronik elektrisch verbunden sein, insbesondere wenn die Leistungselektronik in Form eines Umrichters ausgebildet ist. Hierdurch versorgt die Leistungselektronik den einen Steckverbinder mit der erforderlichen Stromart.

Ein Steckverbinder der Anbaugeräteschnittstelle kann mit einer elektrischen Last oder einem Teilstromkreis des Anbaugeräts elektrisch verbunden sein. Dementsprechend wird die elektrische Last bzw. der eine Teilstromkreis des Anbaugeräts über die Steckverbinder von der Leistungselektronik des Arbeitsfahrzeugs mit elektrischem Strom der erforderlichen Art versorgt.

Gemäß einer besonders bevorzugten Ausführungsform weist das Arbeitsfahrzeug zwei Leistungselektroniken auf. Die Arbeitsfahrzeugschnittstelle weist zwei Steckverbinder auf. Jede Leistungselektronik ist jeweils mit einem Steckverbinder elektrisch verbunden. Dementsprechend kann eine elektrische Last des Anbaugeräts über einen Steckverbinder (des Arbeitsfahrzeugs und des Anbaugeräts) mit der einen Leistungselektronik des Arbeitsfahrzeugs und eine zweite elektrische Last des Anbaugeräts über den Steckverbinder mit der anderen Leistungselektronik des Arbeitsfahrzeugs verbunden werden. Hierdurch können die zwei elektrischen Lasten unabhängig voneinander betrieben werden, was bei landwirtschaftlichen Anbaugeräten mit einer Links-Rechts-Zuordnung von landwirtschaftlichen Arbeitsfunktionen vorteilhaft ist.

Das vorgeschlagene Konzept ermöglicht unterschiedliche Betriebszustände beim Betrieb des Arbeitsfahrzeugs bzw. des Anbaugeräts, welche im Folgenden - nicht abschließend - aufgelistet sind.

So ist ein erster Betriebszustand vorgesehen, bei welchem ein Steckverbinder zur Leistungsübertragung aktiviert und bei welchem ein Steckverbinder deaktiviert ist. Hier ist also lediglich ein Steckverbinder des Arbeitsfahrzeugs mit einem Steckverbinder des Anbaugeräts verbunden. Der andere Steckverbinder des Arbeitsfahrzeugs ist mit keinem weiteren Steckverbinder des Anbaugeräts verbunden. Dieser Betriebszustand kommt insbesondere bei einem Anbaugerät mit lediglich einer elektrischen Last zur Anwendung.

Gemäß einem zweiten Betriebszustand sind zwei Steckverbinder des Arbeitsfahrzeugs zur Leistungsübertragung aktiviert, wobei die zwei Steckverbinder mit zwei Steckverbindern des Anbaugeräts elektrisch verbunden sind. Dieser Betriebszustand ist insbesondere dann zweckmäßig, wenn zwei identische oder unterschiedliche elektrische Lasten des Anbaugeräts zu versorgen sind. Dann kann an jedem Steckverbinder jeweils eine elektrische Last des Anbaugeräts identischer Leistungsaufnahme oder im Wesentlichen unterschiedlicher Leistungsaufnahme angeschlossen sein.

Bei einem dritten Betriebszustand sind zwei Steckverbinder des Arbeitsfahrzeugs zur Leistungsübertragung aktiviert. Die über die zwei Steckverbinder übertragene elektrische Leistung wird einem elektrischen Verbraucher parallelisiert zur Verfügung gestellt, wodurch einem elektrischen Verbraucher maximal die doppelte Leistung zur Verfügung gestellt werden kann, welche über einen Steckverbinder übertragen werden kann.

In einem vierten Betriebszustand werden die zwei Leistungselektroniken derart betrieben, dass dem Anbaugerät drei Phasen und ein Nullleiter, also 4 Leitungsverbindungen, zur Verfügung gestellt werden. Hierzu können die zwei Leistungselektroniken gemeinsam eingesetzt werden, wobei mit der einen Leistungselektronik die drei Phasen des Drehstroms und mit der anderen Leistungselektronik der geschaltete Nullleiter zur Verfügung gestellt wird.

Da die beschriebenen Betriebszustände mit der erfindungsgemäßen Vorrichtung zur Übertragung elektrischer Energie realisierbar sind, ist in vorteilhafter Weise ein rekonfigurierbares und flexibles System zum Betreiben mindestens eines Anbaugeräts an einem Arbeitsfahrzeug gebildet.

Zur Automatisierung der Auswahl des jeweils einzustellenden Betriebszustands kann mindestens ein Mittel vorgesehen sein, mit welchem feststellbar ist, welcher Betriebszustand einzustellen oder welche Stromart dem Anbaugerät zur Verfügung zu stellen ist. Ein solches Mittel kann in Form eines mechanischen Bauteils der Anbaugeräteschnittstelle bzw. der Arbeitsfahrzeugschnittstelle ausgebildet sein. Ein Sensor kann vorgesehen sein, mit welchem das mechanische Bauteil detektierbar ist. So können beispielsweise bei einem Steckverbinder, vorzugsweise von null bis zu vier, Steuerungspins vorgesehen sein, mit welchen Anbaugeräteidentifikationsinformationen kodierbar und übertragbar sind.

Besonders bevorzugt weist das Mittel ein Kommunikationsnetzwerk auf, mit welchem ein elektrischer Verbraucher oder eine Steuereinrichtung des Anbaugeräts mit einer Steuereinrichtung des Arbeitsfahrzeugs und/oder einer Steuereinrichtung der Leistungselektronik Informationen zur Auswahl des einzustellenden Betriebszustands oder der zur Verfügung zu stellenden Stromart austauschbar sind. Das Mittel kann auch ein Teil des Kommunikationsnetzwerks sein. Ein solches Kommunikationsnetzwerk kann auf einem CAN-Bus oder auf einem Ethernet-Datennetz basieren.

Alternativ oder zusätzlich kann das Mittel einen an der Anbaugeräteschnittstelle vorgesehenen Transponder aufweisen. Das Mittel weist eine an der Arbeitsfahrzeugschnittstelle vorgesehene Lese- und/oder Schreibeinrichtung für einen Transponder auf. Hierdurch kann berührungslos bzw. ohne mechanische Kodierungsmittel ein an das Arbeitsfahrzeug angekoppeltes Anbaugerät identifiziert werden.

Gemäß einer besonders bevorzugten Ausführungsform weist die Arbeitsfahrzeugschnittstelle zwei Steckverbinder auf. Nun gibt es unterschiedliche Möglichkeiten Steckverbinder der Anbaugeräteschnittstelle mit den zwei Steckverbindern der Arbeitsfahrzeugschnittstelle zu verbinden. Im Folgenden werden die gängigsten Möglichkeiten aufgelistet.

An die Arbeitsfahrzeugschnittstelle ist eine Anbaugeräteschnittstelle ankoppelbar, welche lediglich einen Steckverbinder aufweist. Dementsprechend sind lediglich diese verbundenen Steckverbinder aktiviert. Der andere Steckverbinder der Arbeitsfahrzeugschnittstelle ist elektrisch deaktiviert und gegenüber äußeren Umwelteinflüssen abgedichtet bzw. abgedeckt.

Die Anbaugeräteschnittstelle kann in Form eines Doppelsteckers ausgebildet sein und zwei Steckverbinder aufweisen. Dementsprechend sind die zwei Steckverbinder der Anbaugeräteschnittstelle mit den beiden Steckverbindern der Arbeitsfahrzeugschnittstelle elektrisch verbunden und im Betrieb des Anbaugeräts aktiviert.

Es ist auch möglich, zwei einzelne Anbaugeräteschnittstellen an die Arbeitsfahrzeugschnittstelle anzukoppeln, wobei jede Anbaugeräteschnittstelle jeweils einen Steckverbinder aufweist. Mit anderen Worten handelt es sich bei einer solchen Anbaugeräteschnittstelle jeweils um einen Einzelstecker.

Das Überwachungsmittel kann in ein Kommunikationsnetzwerk eingebunden und alternativ oder zusätzlich in die Bauelemente der Steckverbinder bzw. der Arbeitsfahrzeugschnittstelle und/oder Anbaugeräteschnittstelle integriert sein.

Besonders bevorzugt ist eine Steuereinrichtung vorgesehen, mit welcher mindestens eine elektrische Last des Anbaugeräts ansteuerbar und/oder regelbar ist. Diese Steuereinrichtung kann an dem Arbeitsfahrzeug vorgesehen sein und unmittelbar Messgrößen des Arbeitsfahrzeugs berücksichtigen. Solche Messgrößen können die Fahrzeuggeschwindigkeit über dem Grund, die Drehzahl des Verbrennungsmotors und/oder der aktuell vorliegende Schlupf eines in Form eines Traktors ausgebildeten Arbeitsfahrzeugs sein. Die Steuereinrichtung steuert insbesondere die mindestens eine Leistungselektronik des Arbeitsfahrzeugs an.

So kann mit der Steuereinrichtung die elektrische Last eines Anbaugeräts mit einer vorgebbaren und im Wesentlichen unveränderlichen Spannung und/oder unveränderlichen Frequenz angesteuert werden. Übliche Kennzahlen hierfür sind beispielsweise 400 V, 50 Hz oder 480 V, 60 Hz - jeweils mit oder ohne Nullleiter - oder eine Rechteckspannung mit 400 Hz und/oder 15 kHz.

Die elektrische Last eines Anbaugeräts kann mit einer vorgebbaren veränderlichen Spannung und/oder vorgebbaren veränderlichen Frequenz vom Arbeitsfahrzeug aus ansteuerbar und/oder regelbar sein. Mit einer solchen Ansteuerung kann die elektrische Last des Anbaugeräts in Abhängigkeit der Geschwindigkeit des Arbeitsfahrzeugs betrieben werden. Bei einem Traktor entspricht dies einer Betriebsart eines mechanisch betriebenen Anbaugeräts mit einer von der Geschwindigkeit des Arbeitsfahrzeugs abhängigen Drehzahl der Zapfwelle, einer so genannten Wegzapfwelle. Zusätzlich oder alternativ kann eine elektrische Last des Anbaugeräts mit einer vorgebbaren veränderlichen Spannung vom Anbaugerät aus ansteuerbar und/oder regelbar sein. So kann das Anbaugerät einen Betriebsmodus aufweisen, bei welchem das Anbaugerät die benötigte Energie zum Betreiben bei dem Arbeitsfahrzeug anfordert.

Es kann ein Kommunikationsnetzwerk zur Datenübertragung vorgesehen sein, über welches eine Steuereinrichtung des Anbaugeräts identifizierbar und oder ansteuerbar ist. Ein solches Kommunikationsnetzwerk kann unter anderem dazu eingesetzt werden, eine Leistungselektronik bzw. einen Umrichter des Arbeitsfahrzeugs zu konfigurieren. Auch können über ein solches Kommunikationsnetzwerk Daten übertragen werden, welche zum Ansteuern bzw. zum Regeln der mindestens einen elektrischen Last des Anbaugeräts dienen. Ein solches Kommunikationsnetzwerk kann einen CAN-Bus oder ein Ethernet, insbesondere ein echtzeitfähiges Ethernet-Datennetz, aufweisen.

Damit ein möglichst hoher Wirkungsgrad des Arbeitsfahrzeugs und/oder des Anbaugeräts erzielbar ist, kann ein Regelkreis vorgesehen sein, welcher die Leistungselektronik des Arbeitsfahrzeugs und/oder eine Steuereinrichtung aufweist. Der Regelkreis kann mit Sensoren und/oder Controllern des Arbeitsfahrzeugs und/oder des Anbaugeräts kommunizieren und ein Kommunikationsnetzwerk zur Datenübertragung aufweisen. Mit diesem Regelkreis kann beispielsweise die oben erwähnte Pulsbreite und/oder Pulsfrequenz und/oder Amplitude einer Rechteckspannung geregelt werden. So kann beispielsweise vorgesehen sein, dass die Steuereinrichtung des Arbeitsfahrzeugs über das Kommunikationsnetzwerk unmittelbar mit Sensoren des Anbaugeräts kommuniziert und in Abhängigkeit der von den jeweiligen Sensoren detektierten Größen die Leistungselektronik des Arbeitsfahrzeugs derart ansteuert, dass die elektrischen Verbraucher des Anbaugeräts unmittelbar mit elektrischer Energie versorgt werden, ohne dass eine weitere Steuereinrichtung auf dem Anbaugerät vorzusehen ist.

Das Netzwerk kann einen CAN-Bus und/oder ein Ethernet-Datennetz, vorzugsweise ein Realtime-Ethernet-Datennetz, aufweisen. Da mit einem Ethernet-Datennetz und insbesondere einem Realtime-Ethernet-Datennetz eine höhere Datenübertragungsrate als mit einem CAN-Bus möglich ist, wird ein auf einem Ethernet-Datennetz basierendes Netzwerk bevorzugt eingesetzt.

Im Konkreten weist das Arbeitsfahrzeug eine Anbauschnittstelle auf, mit welcher ein Anbaugerät an das Arbeitsfahrzeug reversibel ankoppelbar ist. Hierbei kann es sich um einen herkömmlichen Dreipunkt-Geräteanbau, um ein Zugpendel oder um eine sonstige mechanische Kopplung handeln, welche bei landwirtschaftlichen Arbeitsfahrzeugen und/oder Anbaugeräten, und insbesondere bei Traktoren, üblich ist.

Gemäß einer bevorzugten Ausführungsform der vorliegenden Erfindung weist ein landwirtschaftliches Arbeitsfahrzeug eine Vorrichtung zum Übertragen elektrischer Energie von dem Arbeitsfahrzeug auf ein an das Arbeitsfahrzeug ankoppelbares Anbaugerät auf. Das Arbeitsfahrzeug umfasst einen Generator, mindestens eine elektrische Arbeitsfahrzeugschnittstelle und mindestens eine Leistungselektronik. Mit dem Generator ist elektrische Energie erzeugbar. Die Leistungselektronik ist mit dem Generator und mit der Arbeitsfahrzeugschnittstelle elektrisch verbunden. Das Anbaugerät weist mindestens eine Anbaugeräteschnittstelle und eine elektrische Last auf. Mit der elektrischen Last des Anbaugeräts ist eine landwirtschaftliche Arbeitsfunktion ausführbar. Mindestens eine Arbeitsfahrzeugschnittstelle ist mit mindestens einer Anbaugeräteschnittstelle koppelbar und hierüber ist zumindest ein Teil der vom Generator des Arbeitsfahrzeugs erzeugten elektrischen Energie auf das Anbaugerät übertragbar. Die Leistungselektronik ist ausgebildet, um die für die elektrische Last des jeweiligen Anbaugeräts erforderliche Stromart zur Verfügung zu stellen. Mindestens zwei unterschiedliche Stromarten sind von der Leistungselektronik zur Verfügung stellbar. Mit anderen Worten ist das gemäß dieser Ausführungsform definierte landwirtschaftliche Arbeitsfahrzeug mit den erforderlichen elektrischen Komponenten versehen, welche zum Betreiben unterschiedlicher Anbaugeräte mit mindestens einer elektrischen Last zum Ausführen mindestens einer landwirtschaftlichen Arbeitsfunktion erforderlich sind. Insbesondere stellt dieses Arbeitsfahrzeug die notwendige elektrische Infrastruktur und mindestens eine Arbeitsfahrzeugschnittstelle zur Verfügung, an welche eine Anbaugeräteschnittstelle des Anbaugeräts angeschlossen werden kann.

Gemäß einer bevorzugten Ausführungsform der vorliegenden Erfindung umfasst ein landwirtschaftliches Anbaugerät eine Vorrichtung zum Übertragen elektrischer Energie von einem landwirtschaftlichen Arbeitsfahrzeug auf das an das Arbeitsfahrzeug ankoppelbare Anbaugerät. Das Anbaugerät weist mindestens eine Anbaugeräteschnittstelle und mindestens eine elektrische Last auf. Mit der mindestens einen elektrischen Last ist eine landwirtschaftliche Arbeitsfunktion ausführbar. Mindestens eine Arbeitsfahrzeugschnittstelle des Arbeitsfahrzeugs ist mit der mindestens einen Anbaugeräteschnittstelle koppelbar und hierüber ist zumindest ein Teil der vom Generator des Arbeitsfahrzeugs erzeugten elektrischen Energie auf das Anbaugerät übertragbar. Das Arbeitsfahrzeug weist mindestens eine Leistungselektronik auf, welche ausgebildet ist, um die für die elektrische Last des jeweiligen Anbaugeräts erforderliche Stromart zur Verfügung zu stellen. Mindestens zwei unterschiedliche Stromarten sind von der Leistungselektronik zur Verfügung stellbar. Das gemäß dieser Ausführungsform definierte landwirtschaftliche Anbaugerät ist somit zum Ankoppeln an die Ausführungsform des oben beschriebenen landwirtschaftlichen Arbeitsfahrzeugs ausgebildet. Nachdem die Anbaugeräteschnittstelle mit der Arbeitsfahrzeugschnittstelle gekoppelt ist, kann das Anbaugerät mit elektrischer Energie versorgt werden, welche von dem Arbeitsfahrzeug in der für das Anbaugerät benötigten Stromart zur Verfügung gestellt wird.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnungen zu verweisen. In Verbindung mit der Erläuterung der bevorzugten Ausführungsbeispiele der Erfindung anhand der Zeichnungen werden auch im Allgemeinen bevorzugte Ausgestaltungen und Weiterbildungen der Lehre erläutert. In den Zeichnungen zeigen jeweils in einer schematischen Darstellung:
- Fig. 1: ein Ausführungsbeispiel einer erfindungsgemäßen Vorrichtung zum Übertragen elektrischer Energie von einem landwirtschaftlichen Arbeitsfahrzeug auf ein an das Arbeitsfahrzeug angekoppeltes Anbaugerät,
- Fig. 2 bis 4: eine Arbeitsfahrzeugschnittstelle, an welcher jeweils eine andere Anbaugeräteschnittstelle angekoppelt ist.

Gleiche oder ähnliche Bauteile sind in den Figuren mit denselben Bezugszeichen gekennzeichnet.

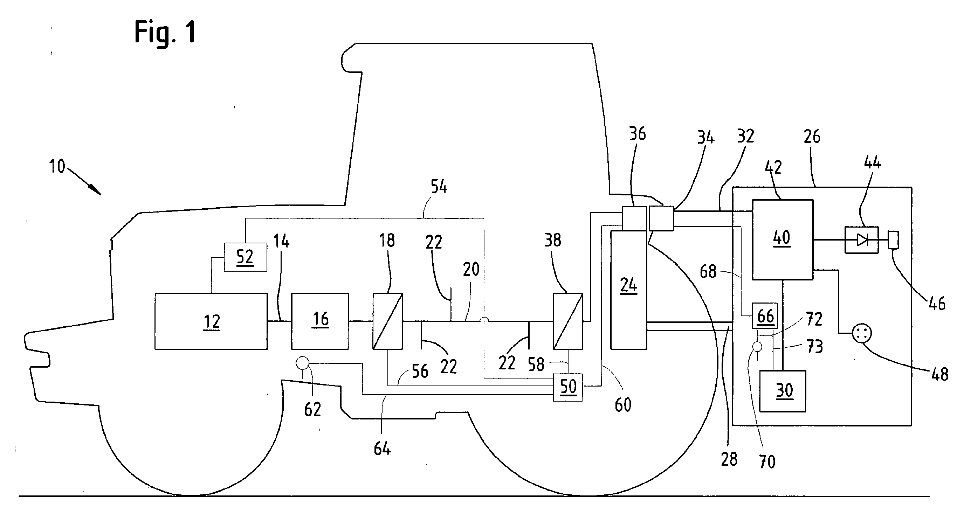

Fig. 1 zeigt ein landwirtschaftliches Arbeitsfahrzeug 10, welches in Form eines Traktors ausgebildet ist. Im Folgenden wird der Traktor ebenfalls mit dem Bezugszeichen 10 bezeichnet. Der Traktor 10 weist einen Verbrennungsmotor 12 auf. Von der Ausgangswelle 14 des Verbrennungsmotors 12 wird einerseits der Fahrantrieb des Traktors 10 über ein in Fig. 1 nicht gezeigtes Getriebe angetrieben. Andererseits treibt die Ausgangswelle 14 den Generator 16 an. Der Generator 16 ist fest am Traktor 10 installiert. Im Konkreten ist der Generator 16 in Form eines Kurbelwellengenerators ausgebildet und mit seinem Stator am Motorgehäuse und mit seinem Rotor am Schwungrad des Verbrennungsmotors 12 angebaut. Der Generator 16 erzeugt dreiphasigen Wechselstrom, welcher über den Umrichter 18 des Generators 16 und einen darin enthaltenen Gleichrichter in Gleichstrom umgewandelt wird. Der Gleichstrom wird in den Gleichspannungszwischenkreis 20 des Traktors 10 eingespeist. Die Spannung des Gleichspannungszwischenkreises 20 beträgt in etwa 700 V. Lediglich schematisch ist angedeutet, dass über die Abzweigungen 22 des Gleichspannungszwischenkreises 20 weitere, in Fig. 1 nicht gezeigte elektrische Verbraucher versorgt werden.

Der Traktor 10 weist eine mechanische Anbauschnittstelle 24 auf, welche in Form eines Dreipunkt-Geräteanbaus, eines Zugpendels und/oder eines sonstigen gängigen Kopplungssystems ausgebildet sein kann. An die Anbauschnittstelle 24 des Traktors 10 ist das Anbaugerät 26 über die mechanische Verbindung 28 angekoppelt. Das Anbaugerät 26 weist unter anderem eine landwirtschaftliche Arbeitsfunktion auf, welche mit einem Elektromotor 30 ausgeübt bzw. angetrieben wird. Der Elektromotor 30 des Anbaugeräts 26 wird von dem elektrischen Versorgungssystem des Traktors 10 mit elektrischer Energie versorgt. Hierzu ist das Anbaugerät 26 über die elektrische Leitung 32 und die Anbaugeräteschnittstelle 34 des Anbaugeräts 26 mit der Arbeitsfahrzeugschnittstelle 36 des Traktors 10 verbunden. Die Arbeitsfahrzeugschnittstelle 36 wiederum ist mit der in Form eines Umrichters 38 ausgebildeten Leistungselektronik elektrisch verbunden. Der Umrichter 38 wandelt den Gleichstrom des Gleichspannungszwischenkreises 20 in Wechselstrom um. Die Wechselspannung liegt in einem Bereich von ungefähr 400 V bis 480 V. Der vom Umrichter 38 gewandelte Wechselstrom wird über die Leitung 32 dem Transformator 40 zugeführt. Dementsprechend wird der Transformator 40 primärseitig mit einer Wechselspannung von 400 V bis 480 V beaufschlagt. Der Transformator 40 ist an dem Anbaugerät 26 vorgesehen und dort fest in einem Gehäuse 42 montiert. Insoweit stellt der Transformator 40 und das Gehäuse 42 eine bauliche Einheit dar.

Der Transformator 40 wandelt die primärseitige Wechselspannung in Höhe von 400 V bis 480 V in eine sekundärseitige Wechselspannung von 200 V bis 240 V. Daher wird der Elektromotor 30 und letztendlich die landwirtschaftliche Arbeitsfunktion mit dieser Wechselspannung angetrieben. An den Transformator 40 ist ein Gleichrichter 44 angeschlossen, welcher aus der sekundärseitigen Wechselspannung Gleichspannung erzeugt und diese über eine Steckdose 46 einem an das Anbaugerät 26 adaptierbaren elektrischen Verbraucher (nicht gezeigt, da nicht an das Anbaugerät 26 adaptiert) zur Verfügung stellt. Weiterhin ist eine Drehstrom-Steckdose 48 vorgesehen, über welche ein elektrischer Verbraucher anschließbar ist (in Fig. 1 nicht gezeigt), welcher mit Drehstrom betrieben wird. Insoweit weist das Anbaugerät 26 ein elektrisches Verteilersystem auf, mit welchem elektrischer Strom an mehrere elektrische Verbraucher, unter anderem dem fest am Anbaugerät 26 installierten Elektromotor 30, zur Verfügung gestellt werden kann.

Das Arbeitsfahrzeug 10 umfasst eine Steuereinrichtung 50, mit welcher die Umrichter 18 und 38 ansteuerbar sind. Die Steuereinheit 52 des Verbrennungsmotors 12 steuert den Verbrennungsmotor 12 in Abhängigkeit von Bedienereingaben an und ist über die Datenleitung 54 des Kommunikationsnetzwerks mit der Steuereinrichtung 50 verbunden. In gleicher Weise sind die Umrichter 18, 38 über die Datenleitungen 56, 58 mit der Steuereinrichtung 50 verbunden. Die Datenleitung 60 verbindet die Steuereinrichtung 50 mit der Arbeitsfahrzeugschnittstelle 36. Der Fahrtgeschwindigkeitssensor 62 ist über die Datenleitung 64 mit der Steuereinrichtung 50 verbunden. Das Anbaugerät 26 umfasst eine Steuereinrichtung 66, welche über die Datenleitung 68 mit der Anbaugeräteschnittstelle 34 verbunden ist. Mit dem Sensor 70 des Anbaugeräts 26 ist eine anbaugerätespezifische Messgröße detektierbar. Der Sensor 70 ist über die Datenleitung 72 mit der Steuereinrichtung 66 verbunden. Der Elektromotor 30 ist über die Datenleitung 73 mit der Steuereinheit 66 verbunden. Die Datenleitungen 60, 68 zwischen den Steuereinrichtungen 50, 66 sowie die weiteren Datenleitungen 54, 56, 58, 64, 72, welche die jeweiligen Komponenten mit den Steuereinrichtung 50, 66 verbinden, bilden das Kommunikationsnetzwerk des Gespanns, bestehend aus Arbeitsfahrzeug 10 und Anbaugerät 26. Über die Datenleitung 54 kann insbesondere die Steuereinheit 52 die momentan vorliegende Drehzahl des Verbrennungsmotors 12 der Steuereinrichtung 50 übermitteln. Weiterhin wird über die Datenleitung 64 der Steuereinrichtung 50 die von dem Fahrtgeschwindigkeitssensor 62 ermittelte Fahrzeuggeschwindigkeit übermittelt. Die von dem Sensor 70 ermittelte anbaugerätspezifische Messgröße sowie der aktuell vorliegende Betriebszustand des Elektromotors 30 werden über die Datenleitungen 72 bzw. 73 der Steuereinrichtung 66 des Anbaugeräts 26 übermittelt. Die Steuereinrichtung 66 steht über die Datenleitungen 60, 68 mit der Steuereinrichtung 50 in Verbindung, über welche die für die Ansteuerung des Elektromotors 30 des Anbaugeräts 26 erforderliche Mess- und Regelgrößen ausgetauscht werden.

Über das Kommunikationsnetzwerk sind Informationen des Elektromotors 30 und der Steuereinrichtung 66 des Anbaugeräts 26 mit der Steuereinrichtung 50 des Arbeitsfahrzeugs 10 austauschbar. Insoweit kann auf Grund der ausgetauschten Daten das Anbaugerät 26 unmittelbar identifiziert werden, sobald die Anbaugeräteschnittstelle 34 mit der Arbeitsfahrzeugschnittstelle 36 verbunden wird. Auch ist ein Regelkreis vorgesehen, welcher Mess- und Regeldaten zwischen der Steuereinrichtung 50 des Arbeitsfahrzeugs 10 zum Ansteuern des Umrichters 38 und mit weiteren Sensoren 62, 70 und Controllern 52 des Anbaugeräts 26 bzw. des Arbeitsfahrzeugs 10 austauscht. Das Kommunikationsnetzwerk basiert auf einem Ethernet-Datennetz, nämlich einem echtzeitfähigen Ethernet-Derivat.

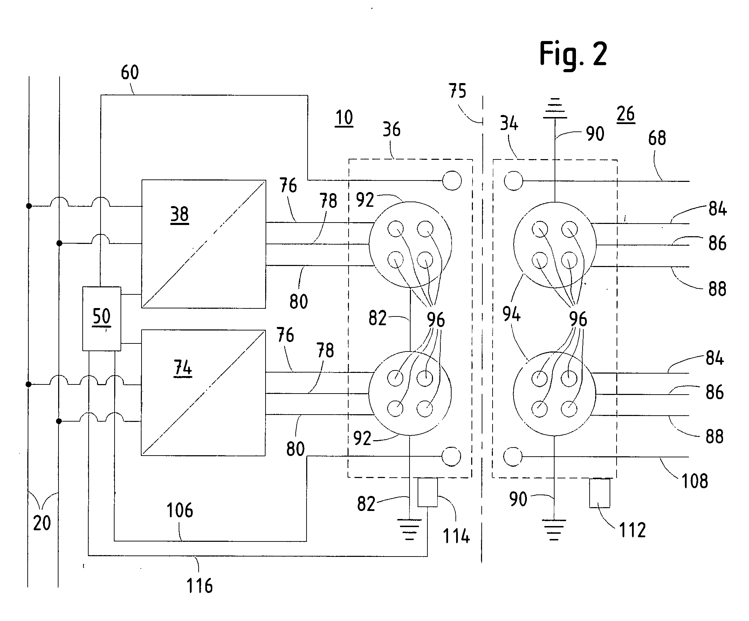

In den Fig. 2 bis 4 sind jeweils eine Arbeitsfahrzeugschnittstelle 36 des Arbeitsfahrzeugs 10 aus Fig. 1 gezeigt, welche mit zwei Leistungselektroniken des Arbeitsfahrzeugs 10 verbunden sind. Nicht alle Komponenten des Arbeitsfahrzeugs 10 aus Fig. 1 sind in den Fig. 2 bis 4 gezeigt. Mit der Trennlinie 75 ist angedeutet, welche Komponenten dem Arbeitsfahrzeug 10 zugeordnet sind (auf der linken Seite gezeigt) und welche Komponenten dem Anbaugerät 26 zugeordnet sind (auf der rechten Seite gezeigt). Die eine Leistungselektronik ist der Umrichter 38 und die andere Leistungselektronik ist der Umrichter 74. Die beiden Umrichter 38, 74 sind an den Gleichspannungszwischenkreis 22 elektrisch parallel angeschlossen und werden von dem Gleichspannungszwischenkreis 20 mit Gleichspannung versorgt. Die zwei Umrichter 38, 74 werden von der Steuereinrichtung 50 angesteuert.

Zur Übertragung der von dem Generator 16 erzeugten elektrischen Energie auf ein Anbaugerät sind sowohl bei der Arbeitsfahrzeugschnittstelle 36 als auch bei einer Anbaugeräteschnittstelle 34 vier elektrische Leitungsverbindungen vorgesehen. Arbeitsfahrzeugseitig sind dies die Leitungsverbindungen 76 bis 82. Anbaugeräteseitig sind dies die Leitungsverbindungen 84 bis 90. Die Leitungsverbindungen 82, 90 weisen die Funktion eines Nullleiters auf. Die Leitungsverbindungen 76 bis 80 und 84 bis 88 werden zur Übertragung elektrischer Energie zwischen Arbeitsfahrzeug 10 und Anbaugerät 26 verwendet. Die Leitungsverbindungen 76 bis 82 sind arbeitsfahrzeugseitig jeweils zu einem Steckverbinder 92 zusammengefasst. Anbaugeräteseitig sind die Leitungsverbindungen 84 bis 90 jeweils zu einem Steckverbinder 94 zusammengefasst. Die beiden Steckverbinder 92 sind in Form einer Steckdose ausgebildet und in einem Gehäuse der Arbeitsfahrzeugschnittstelle 36 angeordnet. Der eine Steckverbinder 92 ist unmittelbar mit dem Umrichter 38 elektrisch verbunden. Der andere Steckverbinder 92 ist unmittelbar mit dem Umrichter 74 elektrisch verbunden.

Die beiden Steckverbinder 94 der Anbaugeräteschnittstelle 34 aus Fig. 2 sind in Form eines Steckers komplementär zu den Steckdosen bzw. Steckverbindern 92 ausgebildet. Die Leitungsverbindungen 84 bis 88 eines jeden Steckverbinders 94 sind anbaugeräteseitige jeweils mit einer in Fig. 2 nicht gezeigten elektrischen Last des Anbaugeräts 26 elektrisch verbunden. Die vier Leitungskontakte 96 eines jeden Steckverbinders 92 bzw. 94 sind jeweils mit den Leitungsverbindungen 76 bis 82 bzw. 84 bis 90 elektrisch verbunden und stellen letztendlich den elektrischen Kontakt zwischen den Steckverbindern 92 und 94 bzw. den entsprechenden Leitungsverbindungen her, sobald die Arbeitsfahrzeugschnittstelle 36 mit der Anbaugeräteschnittstelle 34 elektrisch gekoppelt ist. Bei dem Ausführungsbeispiel gemäß Fig. 2 sind die zwei Steckverbinder 92 des Arbeitsfahrzeugs 10 mit den zwei Steckverbindern 94 des Anbaugeräts 26 elektrisch verbunden, und somit sind beide Steckverbindungen aktiviert.

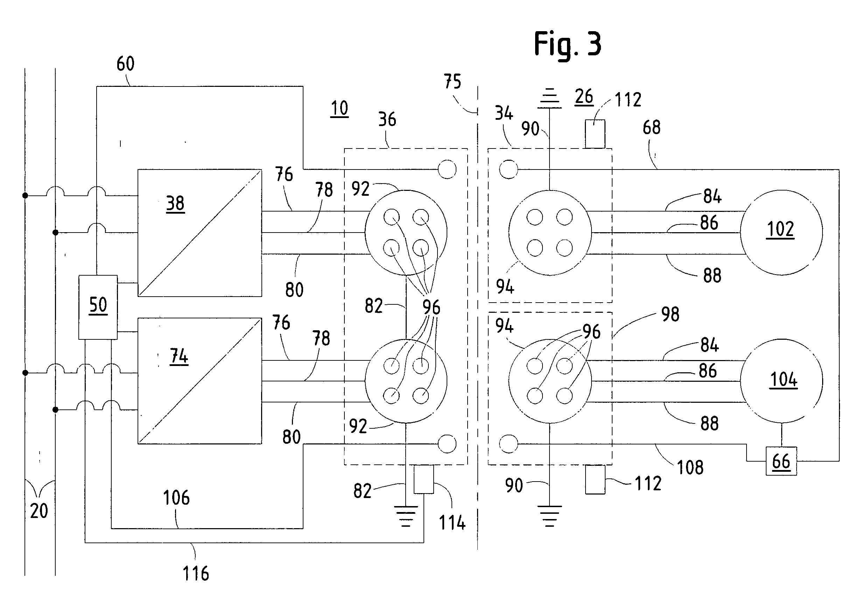

Fig. 3 zeigt ein zu Fig. 2 vergleichbares Ausführungsbeispiel, was die Seite des Arbeitsfahrzeugs 10 angeht. Anbaugeräteseitig sind zwei Anbaugeräteschnittstellen 34, 98 vorgesehen, welche gemeinsam an die Arbeitsfahrzeugschnittstelle 36 angekoppelt sind. Die Anbaugeräteschnittstelle 34 und deren Steckverbinder 94 sind mit einer in Form eines Elektromotors ausgebildeten elektrischen Last 102 verbunden. Die Anbaugeräteschnittstelle 98 mit dem Steckverbinder 100 ist mit einer anderen, ebenfalls in Form eines Elektromotors ausgebildeten elektrischen Last 104 verbunden. So wird die elektrische Last 102 über die elektrischen Schnittstellen 34, 36 von dem Umrichter 38 angesteuert und mit elektrischer Energie versorgt. Die elektrische Last 104 wird über die elektrischen Schnittstellen 36, 98 von dem Umrichter 74 angesteuert und mit elektrischer Energie versorgt und zwar unabhängig von der momentan vorliegenden elektrischen Versorgung der elektrischen Last 102 durch den Umrichter 38.

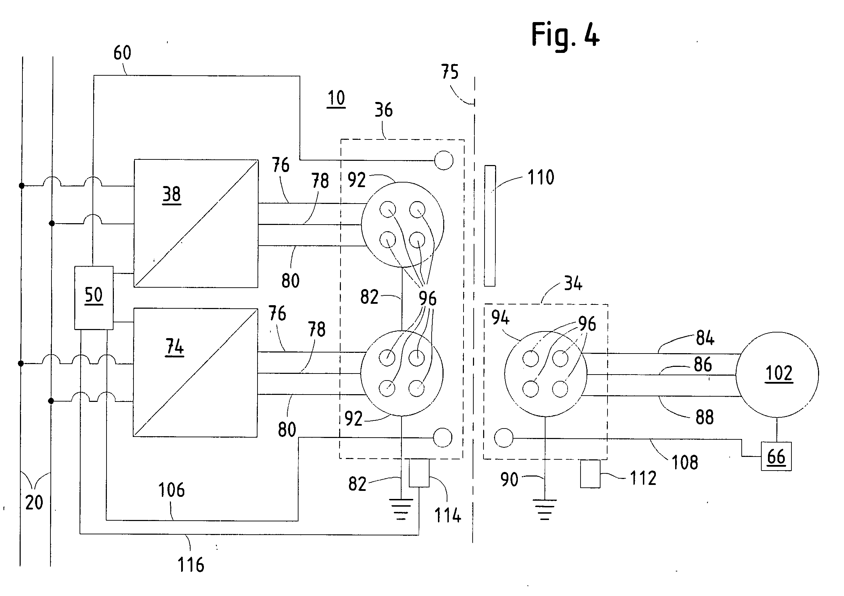

Fig. 4 zeigt ein zu Fig. 3 vergleichbares Ausführungsbeispiel. Allerdings ist anbaugeräteseitig lediglich eine Anbaugeräteschnittstelle 34 vorgesehen. Eine weitere Anbaugeräteschnittstelle ist nicht an die Arbeitsfahrzeugschnittstelle 36 angekoppelt. Dementsprechend sind lediglich die Steckverbinder 92, 94 miteinander elektrisch gekoppelt und aktiv. Der Steckverbinder 94 ist mit der elektrischen Last 102 verbunden, welche somit von dem Umrichter 74 angesteuert und mit elektrischer Energie versorgt wird. Der mit keiner Anbaugeräteschnittstelle verbundene obere Steckverbinder 92 der Arbeitsfahrzeugschnittstelle 36 ist mit einer Abdeckklappe 110 gegen äußere Umwelteinflüsse geschützt.

In den Fig. 2 bis 4 verbinden die Datenleitungen 60, 106 die Steuereinrichtung 50 mit der Arbeitsfahrzeugschnittstelle 36. Hierbei ist die Datenleitung 60 dem oberen Steckverbinder 92 und die Datenleitung 106 dem unteren Steckverbinder 92 der Arbeitsfahrzeugschnittstelle 36 - auch bezüglich der Ansteuer- bzw. Auswertelogik - zugeordnet. In den Fig. 2 und 3 verbinden die Datenleitungen 68, 108 die Anbaugeräteschnittstelle 34 mit der (in Fig. 2 nicht gezeigten) Steuereinrichtung 66. Insbesondere die Datenleitungen 60, 106 bzw. 68, 108 dienen zum Aufbau des Kommunikationsnetzwerks zwischen dem Arbeitsfahrzeug 10 und dem Anbaugerät 26. Insbesondere Fig. 4 ist entnehmbar, dass durch die Ankupplung der Anbaugeräteschnittstelle 34 an die Arbeitsfahrzeugschnittstelle 36 lediglich die Datenleitungen 106, 108 miteinander verbunden sind. Dementsprechend kann lediglich über die Datenleitungen 106, 108 eine Datenverbindung zwischen den zwei Steuereinrichtungen 50, 66 aufgebaut werden. In Abhängigkeit der Identifikation der Steuereinrichtung 66 bei der Steuereinrichtung 50 wird lediglich der der Datenleitung 106 zugeordnete untere Steckverbinder 92 aktiviert. Da an der dem oberen Steckverbinder 92 der Arbeitsfahrzeugschnittstelle 36 zugeordneten Datenleitung 60 keine entsprechende arbeitsfahrzeugseitige Datenleitung angeschlossen ist, wird der obere Steckverbinder 92 deaktiviert und somit spannungsfrei geschaltet.

An den Anbaugeräteschnittstellen 34 aus den Fig. 2 bis 4 sind mit dem Bezugszeichen 112 Transponder bzw. RID-Tags (Radio Frequency Identification Tags) gekennzeichnet. Diese Transponder 112 können mit der Lese- und/oder Schreibeinrichtung 114 berührungslos und auf eine Entfernung von bis zu 30 cm (in Abhängigkeit der verwendeten Art der Transponder) ausgelesen und/oder beschrieben werden. In einem Transponder 112 sind anbaugerätespezifische Daten abgespeichert, welche Betriebsparameter und weitere Informationen zum Betrieb des Anbaugeräts 26 enthalten. Die Lese- und/oder Schreibeinrichtung 114 ist über die Datenleitung 116 mit der Steuereinrichtung 50 verbunden. Sobald eine mit einem Transponder 112 versehene Anbaugeräteschnittstelle 34 sich der Arbeitsfahrzeugschnittstelle 36 annähert, wird dies von der Lese- und/oder Schreibeinrichtung 114 erkannt und über die Datenleitung 116 der Steuereinrichtung 50 übermittelt. Auf Grund dieser Information kann eine Ansteuerlogik basieren, gemäß welcher die Arbeitsfahrzeugschnittstelle 36 dann spannungsfrei geschaltet wird, falls kein Transponder von der Lese- und/oder Steuereinrichtung 114 detektiert wird. Falls die Lese- und/oder Schreibeinrichtung 114 einen Transponder 112 detektiert, jedoch keine Datenverbindung 60, 68 und/oder 106, 108 zwischen den zwei Steuereinrichtungen 50, 66 detektiert werden kann, wird die Arbeitsfahrzeugschnittstelle 36 bzw. der entsprechende Steckverbinder 92 ebenfalls spannungsfrei geschaltet. Lediglich wenn die Lese- und/oder Schreibeinrichtung 114 mindestens einen Transponder detektiert und für jeden der vorgesehenen anbaugeräteseitigen Steckverbinder auch eine entsprechende Datenleitungsverbindung detektiert wird, werden die miteinander verbundenen Steckverbinder mit Strom zum Übertragen elektrischer Energie zwischen Arbeitsfahrzeug 10 und Anbaugerät 26 beaufschlagt. Hierdurch ist ein Überwachungsmittel gebildet, mit welchem festgestellt werden kann, ob die zwei Schnittstellen 34, 36 wirksam miteinander elektrisch verbunden sind.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Vorrichtung zum Übertragen elektrischer Energie von einem landwirtschaftlichen Arbeitsfahrzeug auf ein an das Arbeitsfahrzeug ankoppelbares Anbaugerät, mit mindestens einer arbeitsfahrzeugseitig angeordneten Leistungselektronik (38, 74) und mindestens einer elektrischen Arbeitsfahrzeugschnittstelle (36), wobei die Leistungselektronik (38, 74) mit elektrischer Energie speisbar ist, welche von einem Generator (16) des Arbeitsfahrzeugs (10) erzeugbar ist, wobei die Leistungselektronik (38, 74) mit dem Generator (16) und mit der Arbeitsfahrzeugschnittstelle (36) elektrisch verbindbar ist, wobei das Anbaugerät (26) mindestens eine Anbaugeräteschnittstelle (34) und mindestens eine elektrische Last (30, 102, 104) aufweist, wobei mit der elektrischen Last (30, 102, 104) des Anbaugeräts (26) eine landwirtschaftliche Arbeitsfunktion ausführbar ist, wobei die
Arbeitsfahrzeugschnittstelle (36) mit der Anbaugeräteschnittstelle (34) koppelbar ist und hierüber zumindest ein Teil der vom Generator (16) des Arbeitsfahrzeugs (10) erzeugten elektrischen Energie über die Arbeitsfahrzeugschnittstelle (36) auf das Anbaugerät (26) übertragbar ist, wobei die Leistungselektronik (38, 74) ausgebildet ist, um die für die elektrische Last (30, 102, 104) des jeweiligen Anbaugeräts (26) erforderliche Stromart zur Verfügung zu stellen, und wobei mindestens zwei unterschiedliche Stromarten von der Leistungselektronik (38, 74) zur Verfügung stellbar sind, **dadurch gekennzeichnet, dass** mindestens ein Überwachungsmittel vorgesehen ist, mit welchem überwachbar ist, ob die Anbaugeräteschnittstelle (34) an die Arbeitsfahrzeugschnittstelle (36) vollständig oder unvollständig angeschlossen ist, und/oder ob die Anbaugeräteschnittstelle (34) von der Arbeitsfahrzeugschnittstelle (36) getrennt werden soll, wobei die Arbeitsfahrzeugschnittstelle (36) in einem solchen Fall spannungsfrei geschaltet wird, und/oder ob eine elektrische Isolierung elektrischer Komponenten gegeben ist oder nicht.

2. Vorrichtung nach Anspruch 1, **dadurch gekennzeichnet, dass** die Leistungselektronik einen Umrichter (38, 74) aufweist, welcher derart betreibbar ist, dass mindestens zwei unterschiedliche Stromarten wandelbar sind.

3. Vorrichtung nach Anspruch 1 oder 2, **dadurch gekennzeichnet, dass** die Arbeitsfahrzeugschnittstelle (36) und/oder die Anbaugeräteschnittstelle (34) elektrische Leitungskontakte (96) aufweist, welche zu mindestens einem Steckverbinder (92, 94) zusammengefasst sind, und dass eine elektrische Schnittstelle (36, 34) vorzugsweise zwei Steckverbinder (92, 94) aufweist.

4. Vorrichtung nach Anspruch 3, **dadurch gekennzeichnet, dass** die zu einem Steckverbinder (92) zusammengefassten elektrischen Leitungskontakte (96) mit der Leistungselektronik (38, 74) elektrisch verbunden sind.

5. Vorrichtung nach Anspruch 3 oder 4, **dadurch gekennzeichnet, dass** ein Steckverbinder (94) der Anbaugeräteschnittstelle (34) mit einer elektrischen Last (30, 102, 104) oder einem Teilstromkreis des Anbaugeräts **(26)** elektrisch verbunden ist.

6. Vorrichtung nach einem der Ansprüche 1 bis 5, **dadurch gekennzeichnet, dass** das Arbeitsfahrzeug (10) zwei Leistungselektroniken (38, 74) und die Arbeitsfahrzeugschnittstelle (36) zwei Steckverbinder (92) aufweist, wobei jede Leistungselektronik (38, 74) jeweils mit einem Steckverbinder (92) elektrisch verbunden ist.

7. Vorrichtung nach einem der Ansprüche 3 bis 6, **dadurch gekennzeichnet, dass** ein Betriebszustand vorgesehen ist, bei welchem ein Steckverbinder (92) zur Leistungsübertragung aktiviert und bei welchem ein Steckverbinder **(92)** deaktiviert ist.

8. Vorrichtung nach einem der Ansprüche 3 bis 7, **dadurch gekennzeichnet, dass** ein Betriebszustand vorgesehen ist, bei welchem zwei Steckverbinder (92) zur Leistungsübertragung aktiviert sind.

9. Vorrichtung nach einem der Ansprüche 3 bis 8, **dadurch gekennzeichnet, dass** ein Betriebszustand vorgesehen ist, bei welchem zwei Steckverbinder (92) zur Leistungsübertragung aktiviert sind, wobei die über die zwei Steckverbinder (92) übertragene elektrische Leistung einem elektrischen Verbraucher (102, 104) parallelisiert zur Verfügung stellbar ist.

10. Vorrichtung nach einem der Ansprüche 7 bis 9, **dadurch gekennzeichnet, dass** zur automatisierten Auswahl des jeweils einzustellenden Betriebszustands mindestens ein Mittel (112, 114) vorgesehen ist, mit welchem feststellbar ist, welcher Betriebszustand einzustellen oder welche Stromart dem Anbaugerät (26) zur Verfügung **zu stellen** ist.

11. Vorrichtung nach Anspruch 10, **dadurch gekennzeichnet, dass** das Mittel in Form eines mechanischen Bauteils der Anbaugeräteschnittstelle (34) oder Arbeitsfahrzeugschnittstelle (36) ausgebildet ist, wobei ein Sensor vorgesehen ist, mit welchem das mechanische Bauteil detektierbar ist, und/oder dass das Mittel ein Kommunikationsnetzwerk aufweist, mit welchem ein elektrischer Verbraucher (30, 102, 104) oder eine Steuereinrichtung (66) des Anbaugeräts (26) mit einer Steuereinrichtung (50) des Arbeitsfahrzeugs (10) und/oder einer Steuereinrichtung (50) der Leistungselektronik (38, 74) Informationen zur Auswahl des einzustellenden Betriebszustands oder der zur Verfügung zu stellenden Stromart austauschen kann, und/oder dass das Mittel einen an der Anbaugeräteschnittstelle (34) vorgesehenen Transponder (112) und eine an der Arbeitsfahrzeugschnittstelle (36) vorgesehene Lese- und/oder Schreibeinrichtung (114) für einen Transponder (112) aufweist.

12. Vorrichtung nach einem der Ansprüche 1 bis 11, **dadurch gekennzeichnet, dass** eine Steuereinrichtung (66) vorgesehen ist, mit welcher mindestens eine elektrische Last (30, 102, 104) des Anbaugeräts (26) ansteuerbar und/oder regelbar ist.

13. Vorrichtung nach einem der Ansprüche 1 bis 12, **dadurch gekennzeichnet, dass** ein Kommunikationsnetzwerk **(60, 68)** zur Datenübertragung vorgesehen ist, über welches eine Steuereinrichtung (66) des Anbaugeräts (26) identifizierbar und/oder ansteuerbar ist.

14. Fahrzeuggespann, bestehend aus einem landwirtschaftlichen Arbeitsfahrzeug (10) und einem an das Arbeitsfahrzeug (10) angekoppelten Anbaugerät (26), **gekennzeichnet durch** eine Vorrichtung nach einem der Ansprüche 1 bis 13.

## Claims

1. Device for transmitting electrical energy from an agricultural utility vehicle to an attachment which can be coupled to the utility vehicle, having at least one power electronics system (38, 74) which is arranged on the utility vehicle side and at least one electrical utility vehicle interface (36), wherein the power electronics system (38, 74) can be supplied with electrical energy which can be generated by a generator (16) of the utility vehicle (10), wherein the power electronics system (38, 74) can be connected electrically to the generator (16) and to the utility vehicle interface (36), wherein the attachment (26) has at least one attachment interface (34) and at least one electrical load (30, 102, 104), wherein an agricultural working function can be carried out with the electrical load (30, 102, 104) of the attachment (26), wherein the utility vehicle interface (36) can be coupled to the attachment interface (34) and in this way at least some of the electrical energy which is generated by the generator (16) of the utility vehicle (10) can be transmitted to the attachment (26) via the utility vehicle interface (36), wherein, the power electronics system (38, 74) is designed to make available the type of current which is necessary for the electrical load (30, 102, 104) of the respective attachment (26), and wherein at least two different types of current can be made available by the power electronics system (38, 74), **characterized in that**,
at least one monitoring means is provided with which it is possible to monitor whether the attachment interface (34) is completely or incompletely connected to the utility vehicle interface (36), and/or whether the attachment interface (34) is to be disconnected from the utility vehicle interface (36), wherein the utility vehicle interface (36) is switched to a voltage-free state in such a case, and/or whether or not the electrical components are electrically insulated.

2. Device according to Claim 1,
**characterized in that**,
the power electronics system has a power converter (38, 74) which can be operated in such a way that at least two different types of current can be converted.

3. Device according to Claim 1 or 2,
**characterized in that**,
the utility vehicle interface (36) and/or the attachment interface (34) has electrical line contacts (96) which are combined to form at least one plug-type connector (92, 94), and **in that** an electrical interface (36, 34) preferably has two plug-type connectors (92; 94).

4. Device according to Claim 3,
**characterized in that**,
the electrical line contacts (96) which are combined to form a plug-type connector (92) are connected electrically to the power electronics system (38, 74).

5. Device according to Claims 3 or 4,
**characterized in that**,
a plug-type connector (94) of the attachment interface (34) is connected electrically to an electrical load (30, 102, 104) or to a component circuit of the attachment (26).

6. Device according to one of Claims 1 to 5,
**characterized in that**,
the utility vehicle (10) has two power electronics systems (38, 74) and the utility vehicle interface (36) has two plug-type connectors (92), wherein each power electronics system (38, 74) is respectively connected electrically to a plug-type connector (92).

7. Device according to one of Claims 3 to 6,
**characterized in that**,
an operating state is provided in which a plug-type connector (92) is activated in order to transmit power, and in which a plug-type connector (92) is deactivated.

8. Device according to one of Claims 3 to 7,
**characterized in that**,
an operating state is provided in which two plug-type connectors (92) are activated in order to transmit power.

9. Device according to one of Claims 3 to 8,
**characterized in that**,
an operating state is provided in which two plug-type connectors (92) are activated in order to transmit power, wherein the electrical power which is transmitted via the two plug-type connectors (92) can be made available to an electrical load (102, 104) in a parallelized fashion.

10. Device according to one of Claims 7 to 9,
**characterized in that**,
for the automatic selection of each operating state to be set, at least one means (112, 114) is provided which can be used to determine which operating state is to be set or which type of current is to be made available to the attachment (26).

11. Device according to Claim 10,
**characterized in that**,
the means is embodied in the form of a mechanical component of the attachment interface (34) or utility vehicle interface (36), wherein a sensor is provided by means of which the mechanical component can be detected, and/or **in that** the means has a communications network with which an electrical load (30, 102, 104) or a control device (66) of the attachment (26) can exchange, with a control device (50) of the utility vehicle (10) and/or a control device (50) of the power electronics system (38, 74), information relating to the selection of the operating state which is to be set or to the type of current which is to be made available, and/or **in that** the means has a transponder (112) which is provided at the attachment interface (34) and a reading and/or writing device (114), provided at the utility vehicle interface (36), for a transponder (112).

12. Device according to one of Claims 1 to 11,
**characterized in that**,
a control device (66) is provided with which at least one electrical load (30, 102, 104) of the attachment (20) can be actuated and/or controlled.

13. Device according to one of Claims 1 to 12,
**characterized in that**,
a communications network (60, 68) is provided for transmitting data, by means of which communications network a control device (66) of the attachment (26) can be identified and/or actuated.

14. Vehicle combination composed of an agricultural utility vehicle (10) and an attachment (26) coupled to the utility vehicle (10) **characterized by** a device according to one of Claims 1 to 13.

## Revendications

1. Dispositif de transmission d'énergie électrique d'un véhicule de travail agricole à un outil rapporté qui peut être accouplé au véhicule de travail, comprenant au moins une électronique de puissance (38, 74) montée du côté du véhicule de travail et au moins une interface électrique de véhicule de travail (36), l'électronique de puissance (38, 74) pouvant être alimentée en énergie électrique qui peut être générée par un générateur (16) du véhicule de travail (10), l'électronique de puissance (38, 74) pouvant être reliée électriquement avec le générateur (16) et avec l'interface de véhicule de travail (36), l'outil rapporté (26) présentant au moins une interface d'outil rapporté (34) et au moins une charge électrique (30, 102, 104), une fonction de travail agricole pouvant être accomplie avec la charge électrique (30, 102, 104) de l'outil rapporté (26), l'interface de véhicule de travail (36) pouvant être connectée à l'interface d'outil rapporté (34) et, par ce biais, au moins une partie de l'énergie électrique générée par le générateur (16) du véhicule de travail (10) pouvant être transmise à l'outil rapporté (26) par le biais de l'interface de véhicule de travail (36), l'électronique de puissance (38, 74) étant configurée pour mettre à disposition le type de courant nécessaire pour la charge électrique (30, 102, 104) de l'outil rapporté (26) correspondant, et au moins deux types de courant différents pouvant être mis à disposition par l'électronique de puissance (38, 74), **caractérisé en ce qu'**il existe au moins un moyen de surveillance qui permet de surveiller si l'interface d'outil rapporté (34) est raccordée entièrement ou non entièrement à l'interface de véhicule de travail (36) et/ou si l'interface d'outil rapporté (34) doit être déconnectée de l'interface de véhicule de travail (36), l'interface de véhicule de travail (36) étant dans un tel cas mise hors tension, et/ou s'il existe ou non une isolation électrique des composants électriques.

2. Dispositif selon la revendication 1, **caractérisé en ce que** l'électronique de puissance présente un convertisseur de tension (38, 74) qui peut fonctionner de manière à pouvoir convertir au moins deux types de courant différents.

3. Dispositif selon la revendication 1 ou 2, **caractérisé en ce que** l'interface de véhicule de travail (36) et/ou l'interface d'outil rapporté (34) présentent des contacts de ligne électriques (96) qui sont regroupés en au moins un connecteur à enficher (92, 94), et **en ce qu'**une interface électrique (36, 34) présente de préférence deux connecteurs à enficher (92, 94).

4. Dispositif selon la revendication 3, **caractérisé en ce que** les contacts de ligne électriques (96) regroupés en un connecteur à enficher (92) sont reliés électriquement avec l'électronique de puissance (38, 74).

5. Dispositif selon la revendication 3 ou 4, **caractérisé en ce qu'**un connecteur à enficher (94) de l'interface d'outil rapporté (34) est relié électriquement avec une charge électrique (30, 102, 104) ou avec un circuit électrique partiel de l'outil rapporté (26).

6. Dispositif selon l'une des revendications 1 à 5, **caractérisé en ce que** le véhicule de travail (10) présente deux électroniques de puissance (38, 74) et l'interface de véhicule de travail (36) deux connecteurs à enficher (92), chaque électronique de puissance (38, 74) étant respectivement reliée électriquement avec un connecteur à enficher (92).

7. Dispositif selon l'une des revendications 3 à 6, **caractérisé en ce qu'**il existe un état de fonctionnement dans lequel un connecteur à enficher (92) est activé pour la transmission de puissance et dans lequel un connecteur à enficher (92) est désactivé.

8. Dispositif selon l'une des revendications 3 à 7, **caractérisé en ce qu'**il existe un état de fonctionnement dans lequel deux connecteurs à enficher (92) sont activés pour la transmission de puissance.

9. Dispositif selon l'une des revendications 3 à 8, **caractérisé en ce qu'**il existe un état de fonctionnement dans lequel deux connecteurs à enficher (92) sont activés pour la transmission de puissance, la puissance électrique transmise par le biais des deux connecteurs à enficher (92) pouvant être mise à disposition d'une charge électrique (102, 104) en parallèle.

10. Dispositif selon l'une des revendications 7 à 9, **caractérisé en ce que** pour la sélection automatisée de l'état de fonctionnement correspondant à établir, il existe au moins un moyen (112, 114) qui permet de déterminer l'état de fonctionnement à établir ou le type de courant qu'il faut mettre à disposition de l'outil rapporté (26).

11. Dispositif selon la revendication 10, **caractérisé en ce que** le moyen est réalisé sous la forme d'un composant mécanique de l'interface d'outil rapporté (34) ou de l'interface de véhicule de travail (36), un capteur étant présent avec lequel le composant mécanique peut être détecté, et/ou **en ce que** le moyen présente un réseau de communication avec lequel une charge électrique (30, 102, 104) ou un dispositif de commande (66) de l'outil rapporté (26) peu échanger des informations avec un dispositif de commande (50) du véhicule de travail (10) et/ou un dispositif de commande (50) de l'électronique de puissance (38, 74) en vue de sélectionner l'état de fonctionnement à établir ou sur le type de courant à mettre à disposition, et/ou **en ce que** le moyen présente un transpondeur (112) présent sur l'interface d'outil rapporté (34) et un dispositif de lecture et/ou d'écriture (114) pour un transpondeur (112) présent sur l'interface de véhicule de travail (36).

12. Dispositif selon l'une des revendications 1 à 11, **caractérisé en ce qu'**il existe un dispositif de commande (66) qui permet de commander et/ou de réguler au moins une charge électrique (30, 102, 104) de l'outil rapporté (26).

13. Dispositif selon l'une des revendications 1 à 12, **caractérisé en ce qu'**il existe un réseau de communication (60, 68) pour la transmission de données par le biais duquel peut être identifié et/ou commandé un dispositif de commande (66) de l'outil rapporté (26).

14. Train de véhicule, composé d'un véhicule de travail agricole (10) et d'un outil rapporté (26) accouplé au véhicule de travail (10), **caractérisé par** un dispositif selon l'une des revendications 1 à 13.
